# FASCICULE DE BREVET EUROPEEN

(11) **EP 0 768 960 B1**
(45) Date de publication et mention de la délivrance du brevet: **10.01.2001**
(21) Numéro de dépôt: 95925018.4
(22) Date de dépôt: 06.07.1995
(51) Int. Cl.: B60M 1/225, B60M 1/24

(54) **DISPOSITIF DE SUSPENSION D'UN CONDUCTEUR ELECTRIQUE A UN CABLE PORTEUR**
AUFHÄNGUNGSVORRICHTUNG EINES ELEKTRISCHEN LEITERS AN EIN TRAGSEIL
DEVICE FOR SUSPENDING AN ELECTRICAL CONDUCTOR FROM A CARRYING CABLE

(30) Priorité: 07.07.1994 FR 9408422
(43) Date de publication de la demande: 23.04.1997
(73) Titulaire: DERMAC INDUSTRIE, 94404 Vitry-sur-Seine (FR); Simel, 21220 Gevrey-Chambertin (FR); SOCIETE NATIONALE DES CHEMINS DE FER FRANCAIS, F-75009 Paris (FR)
(72) Inventeur: LEMAIRE, Eric, F-45700 Pannes (FR); NEIGE, Guy, F-21000 Dijon (FR); THIARD, Jean-Claude, F-21300 Chenove (FR); DE FAUCAMBERGE, Philippe, F-92100 Boulogne (FR)
(74) Mandataire: Armengaud Ainé, Alain
(86) Numéro de dépôt international: FR9500906
(87) Numéro de publication internationale: WO9601747

(56) Documents cités:
- DE-A- 3 036 045
- DE-A- 3 522 543
- FR-A- 682 102

## Description

La présente invention est relative à un dispositif de suspension d'un conducteur électrique à un câble porteur. L'invention se réfère plus particulièrement à un tel dispositif dénommé pendule de connexion permettant de réaliser une liaison mécanique articulée et électrique entre un conducteur tel que notamment le fil de contact d'une ligne aérienne de traction électrique et son câble porteur. On sait que dans un tel système le pendule de connexion supporte le fil de contact et assure également la continuité électrique entre le câble porteur et ce fil de contact.

On connaît déjà des pendules de connexion permettant de réaliser une telle liaison mécanique et électrique. Ainsi DE-A 35 22 543 et DE-A 30 36 045 décrivent des pendules de connexion assurant la liaison mécanique articulée et électrique entre un câble porteur et un conducteur, plus particulièrement le fil de contact d'une ligne aérienne de traction électrique, dans lesquels le câble du pendule assure la continuité électrique entre le câble porteur et le fil de contact. Ces systèmes connus prévoient des griffes pour assurer les raccordements respectifs au câble porteur et au fil de contact et la connexion du câble du pendule avec les dites griffes est réalisée par l'intermédiaire d'embouts dans lesquels sont serties les extrémités du câble du pendule.

FR-A 682 102 décrit une griffe de pendule de suspension de fil de contact d'une ligne de caténaire sur son câble porteur qui est constituée de deux pièces identiques venant s'encliqueter l'une sur l'autre, chaque pièce comportant une rainure dans laquelle vient se loger le fil de contact, l'ensemble étant verrouillé par un fil métallique traversant les deux pièces de la griffe.

Cependant, ces pendules connus ne donnent pas toute satisfaction, notamment en ce qui concerne les modes de solidarisation du câble du pendule avec les systèmes de serrage mis en oeuvre pour maintenir le pendule entre le câble porteur et le fil de contact. Ces systèmes connus présentent notamment l'inconvénient d'entraîner la formation d'arcs électriques au niveau des différents organes de liaison.

La présente invention se propose d'apporter un pendule de connexion permettant d'éviter la formation d'arcs électriques et de supprimer les ensembles de répartition électrique, le pendule remplissant simultanément une fonction mécanique articulée de support du fil de contact et une fonction d'alimentation électrique.

En conséquence, l'invention apporte un pendule de connexion, assurant la liaison mécanique articulée et électrique entre un câble porteur et un conducteur plus particulièrement le fil de contact d'une ligne aérienne de traction électrique, dans lequel le câble du pendule assure la continuité électrique entre le câble porteur et le fil de contact, la connexion du câble du pendule avec les griffes de raccordement respectives au câble porteur et au fil de contact étant réalisée par l'intermédiaire d'embouts dans lesquels sont serties les extrémités du câble du pendule, les dites griffes de raccordement étant réalisées en deux parties amovibles venant s'encliqueter l'une sur l'autre pour serrer respectivement le câble porteur et le fil de contact caractérisé en ce que le câble est discontinu : ses deux extrémités sont respectivement serties sur des embouts solidaires de cosses engagées dans les griffes de raccordement et des conducteurs dont les extrémités sont respectivement serties dans des logements solidaires desdites griffes et sur les dites cosses assurant la liaison électrique par le câble du pendule entre le câble porteur et le fil de contact.

Selon un mode de réalisation préféré, chacune des griffes de raccordement est constituée de deux éléments similaires venant s'encliqueter l'un sur l'autre, chacun des dits éléments comportant une embase et un élément de crochet qui est pourvu sur sa face interne d'une surface plane profilée venant coopérer lors de l'encliquetage avec la surface correspondante de l'élément de crochet similaire prévu sur le second élément de la griffe, afin de constituer un oeil dans lequel vient en prise la cosse sertie sur le câble du pendule, les parties inférieures respectives des deux éléments de griffe délimitant une rainure dans laquelle s'engage le fil de contact ou le câble porteur lors de l'encliquetage des deux éléments, assurant ainsi le serrage du fil de contact ou du câble porteur dans la griffe correspondante, sans avoir recours à un moyen de montage indépendant, notamment un serrage par boulonnerie.

D'autres caractéristiques et avantages de la présente invention ressortiront de la description faite ci-après en référence aux dessins annexés qui en illustrent un exemple de réalisation dépourvu de tout caractère limitatif. Sur les dessins:
- la figure 1 est une vue en élévation frontale d'un mode de réalisation (mode discontinu) du pendule de connexion selon la présente invention,
- la figure 2 est une vue en élévation latérale de la figure 1.
- les figures 3 et 4 sont respectivement des vues en élévation frontale, de modes de réalisation de l'un des éléments constituant une griffe de raccordement du pendule de connexion selon la présente invention, ces différentes figures étant à des échelles agrandies par rapport aux figures précédentes.

Ainsi qu'on l'a déjà précisé, le pendule de connexion selon la présente invention est conçu et réalisé de manière à supprimer les ensembles de répartition électrique en remplissant à la fois la fonction mécanique et la fonction d'alimentation électrique. Dans un tel pendule de connexion, les liaisons entre les différents éléments sont réalisées sans avoir recours à un montage indépendant notamment à un serrage par boulonnerie.

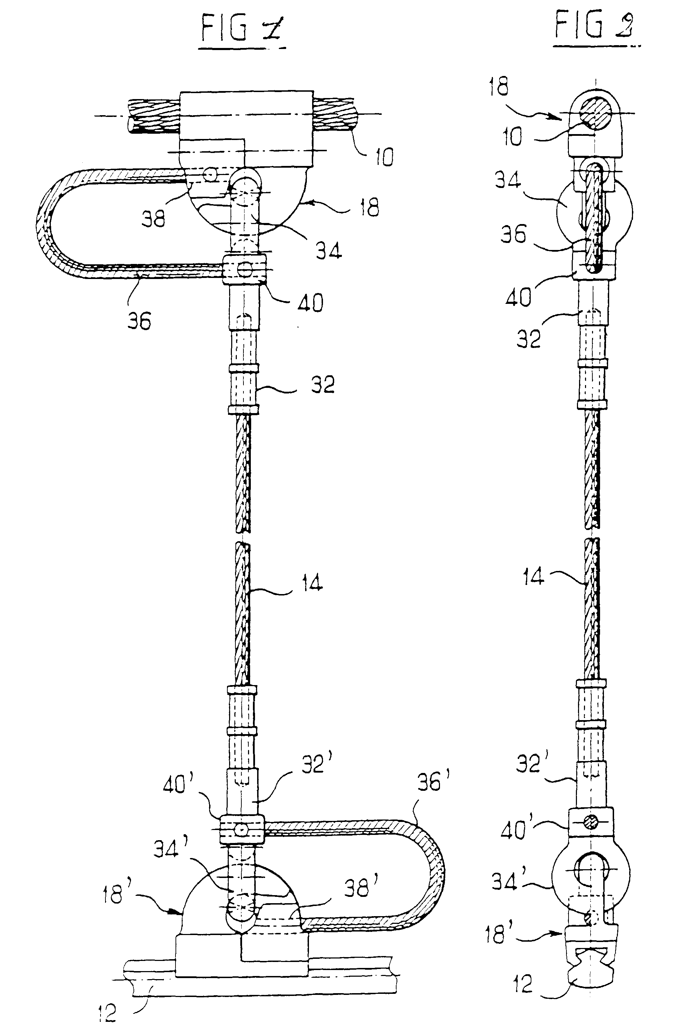

On se réfère aux figures 1 et 2 qui illustrent un mode de réalisation de l'invention (mode discontinu).

Le câble (14) du pendule de connexion comporte des extrémités qui sont serties sur des embouts (32, 32' respectivement), ces embouts étant solidaires d'une cosse (34, 34', respectivement) comportant un oeil venant en prise dans les griffes de raccordement (18, 18'). Afin d'assurer la continuité électrique entre le câble porteur (10) et le fil de contact (12), on prévoit des câbles conducteurs tels que (36, 36') dont les extrémités respectives sont rendues solidaires de la cosse (34, 34' respectivement), et de la griffe de raccordement (18, 18' respectivement).

L'une des extrémités de chaque câble conducteur (36, 36') est sertie dans un logement (38, 38') solidaire de la griffe de raccordement (18, 18') et son autre extrémité est maintenue par sertissage dans un logement (40, 40') solidaire respectivement d'une cosse (34, 34' respectivement).

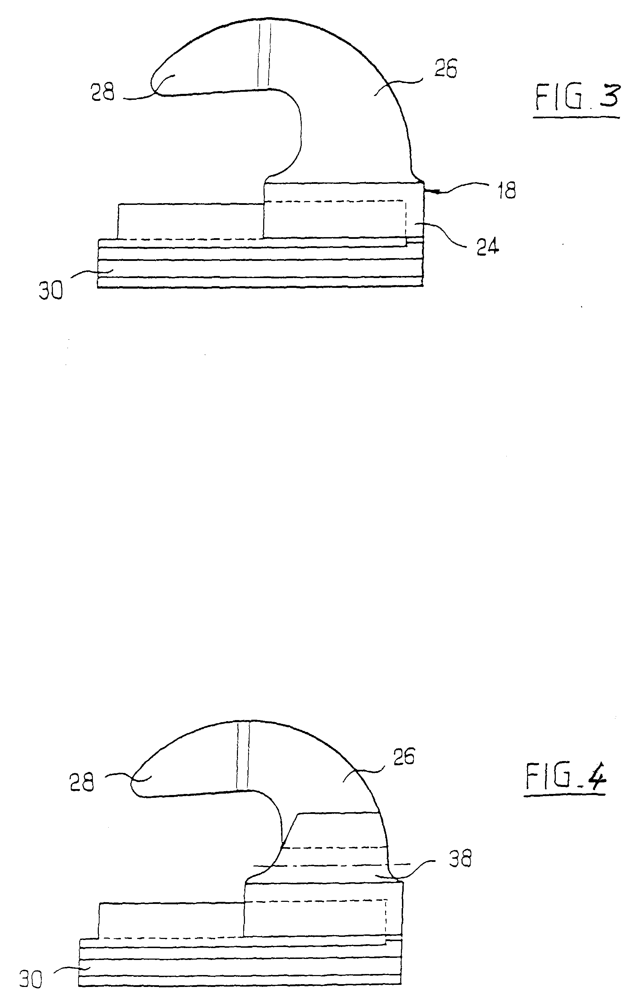

Dans cet exemple de réalisation, les griffes de raccordement (18, 18') présentent la même constitution que celle décrite ci-après en référence aux figures 3 et 4. Le choix de la longueur du câble (14) du pendule de connexion permet de modifier la distance entre le câble porteur (10) et le fil de contact (12), ce mode d'exécution remplit à la fois la fonction mécanique de support de la ligne de contact, et la fonction d'alimentation électrique, les liaisons entre les différents éléments du pendule étant obtenues sans faire appel à un montage indépendant tel que notamment un serrage par boulonnerie.

On se réfère maintenant aux figures 3 et 4 qui représentent en détail les éléments d'un exemple de réalisation d'une griffe de raccordement (18, 18') qui réalise la liaison entre le câble (14) du pendule d'une part, et le câble porteur (10), en ce qui concerne la griffe de raccordement (18), et le fil de contact (12) en ce qui concerne la griffe de raccordement (18').

Ainsi qu'on l'a mentionné dans la description qui précède, chaque griffe de raccordement comprend deux éléments similaires conçus de façon à s'encliqueter l'un sur l'autre comme on le voit sur la figure 1. Chaque élément de griffe de raccordement (18, 18') comporte donc une embase (24) et un élément de crochet (26) pourvu sur sa face interne d'une surface plane profilée (28) destinée à venir coopérer avec la surface correspondante de l'élément de crochet similaire qui est prévu sur le second élément de la griffe de raccordement (18, 18'), pour constituer un oeil dans lequel vient s'engager l'oeil des cosses (34 ou 34') décrites ci-dessus, comme on le voit clairement sur les figures 1 et 2. L'encliquetage des deux éléments de griffe de raccordement (18, 18') s'effectue lors du serrage sur le câble correspondant, câble porteur (10) ou fil de contact (12), ce dernier venant en prise dans le logement délimité par la rainure (30) de chacun des éléments de griffe de raccordement.

L'invention permet la fabrication, à un coût de série, de pendules de connexion en atelier, à partir de listes de pendulage pré-établies, les longueurs des câbles (14) des pendules étant réglées en usine, et, en outre, elle est adaptée au montage sur site pour des réalisations à la demande.

## Revendications

1. Pendule de connexion assurant la liaison mécanique articulée et électrique entre un câble porteur et un conducteur plus particulièrement le fii de contact d'une ligne aérienne de traction électrique, dans lequel le câble du pendule assure la continuité électrique entre le câble porteur et le fil de contact, la connexion du câble (14) du pendule avec les griffes (18, 18') de raccordement respectives au câble porteur (10) et au fil de contact (12) étant réalisée par l'intermédiaire d'embouts (32, 32') dans lesquels sont serties les extrémités du câble du pendule, les dites griffes de raccordement (18, 18') étant réalisées en deux parties amovibles venant s'encliqueter l'une sur l'autre pour serrer respectivement le câble porteur (10) et le fil de contact (12) caractérisé en ce que le câble (14) est discontinu: ses deux extrémités sont respectivement serties sur des embouts (32, 32') solidaires de cosses (34, 34') engagées dans les griffes de raccordement (18, 18') et des conducteurs (36, 36') dont les extrémités sont respectivement serties dans des logements (38, 38') solidaires des dites griffes (18, 18') et sur les dites cosses (34, 34'), assurant la liaison électrique par le câble du pendule (14) entre le câble porteur (10) et le fil de contact (12).

2. Pendule de connexion selon la revendication 1 caractérisé en ce que chacune des griffes de raccordement (18, 18') est constituée de deux parties similaires venant s'encliqueter l'une sur l'autre, chacune des dites parties de chaque griffe de raccordement comportant une embase (24) et un élément de crochet (26) qui est pourvu sur sa face interne d'une surface plane profilée (28) venant coopérer lors de l'encliquetage avec la surface correspondante de l'élément de crochet similaire prévu sur la seconde partie de la griffe, afin de constituer un oeil dans lequel vient en prise la cosse (34 , 34') sertie sur le câble (14) du pendule et en ce que les parties inférieures respectives des deux éléments de griffe délimitent une rainure dans laquelle s'engage le fil de contact (12) ou le câble porteur (10) lors de l'encliquetage des deux parties des griffes de raccordement, assurant ainsi le serrage du fil de contact (12) ou du câble porteur (10) dans la griffe correspondante.

## Patentansprüche

1. Aufhängevorrichtung, welche die gelenkige mechanische und elektrische Verbindung eines Tragseils mit einem Leiter, insbesondere dem Fahrdraht einer Oberleitung für elektrische Traktion, sicherstellt, in welcher das Hängeseil der Aufhängevorrichtung für elektrische Kontinuität zwischen Tragseil und Fahrdraht sorgt, wobei die Verbindung des Hängeseils (14) der Aufhängevorrichtung mit dem jeweiligen Anschlussgreiforgan (18, 18') am Tragseil (10) und am Fahrdraht (12) über Zwischenansatzstücke (32, 32') realisiert wird, in welche die Enden des Hängeseils der Aufhängevorrichtung eingesetzt sind, und wobei die Anschlussgreiforgane (18, 18') aus zwei lösbaren Teilen hergestellt sind, die ineineinander einrasten, um das Tragseil (10) bzw. den Fahrdraht (12) zu umfassen, **dadurch gekennzeichnet, dass** das Hängeseil (14) mehrteilig ist: seine beiden Enden sind jeweils in Ansatzstücke (32, 32') eingesetzt, die mit in die Anschlussgreiforgane (18, 18') eingreifenden Seilkauschen (34, 34') und mit Leitern (36, 36') verbunden sind, deren Enden jeweils in Aufnahmen (38, 38'), die mit den Anschlussgreiforganen (18, 18') verbunden sind, und in die Seilkauschen (34, 34') eingesetzt sind, wobei durch das Hängeseil (14) der Aufhängevorrichtung die elektrische Verbindung des Tragseils (10) mit dem Fahrdraht (12) sichergestellt wird,

2. Aufhängevorrichtung nach Anspruch 1, **dadurch gekennzeichnet, dass** jedes der Anschlussgreiforgane (18, 18') aus zwei ähnlichen ineinander einrastenden Teilen besteht, wobei jedes der Teile des jeweiligen Anschlussgreiforgans einen Fuß (24) und ein Hakenelement (26) umfasst, das auf seiner Innenseite mit einer glatten stromlinienförmigen Fläche (28) versehen ist, die beim Einrasten mit der entsprechenden Fläche des ähnlichen Hakenelements zusammenwirkt, das am zweiten Teil des Anschlussgreiforgans vorgesehen ist, um ein Anschlussauge zu bilden, in welches die am Hängeseil (14) der Aufhängevorrichtung eingesetzte Seilkausche (34, 34') zur Aufnahme kommt, und dass die jeweiligen unteren Teile der beiden Elemente des Greiforgans eine Nut begrenzen, in welche beim Einrasten der beiden Teile der Anschlussgreiforgane der Fahrdraht (12) bzw. das Tragseil (10) eingreift, wodurch das Umfassen von Fahrdraht (12) bzw. Tragseil (10) vom entsprechenden Anschlussgreiforgan sichergestellt wird.

## Claims

1. Connecting pendulum for producing the articulated mechanical and electrical linkage between a carrying cable and a conductor, more particularly the contact wire of an overhead electrical pulling line, in which the cable of the pendulum provides the electrical continuity between the carrying cable and the contact wire, the connection between the pendulum cable (14) with the respective connecting claws (18, 18') and the carrying cable (10) and the contact wire (12) being produced via connecting pieces (32, 32') in which the ends of the pendulum cable are crimped, said connecting claws (18, 18') being produced in two detachable parts which are snapped together so as to grip the carrying cable (10) and the contact wire (12) respectively, characterised in that the cable (14) is discontinuous: its two ends are crimped on the respective connecting pieces (32, 32') integral with thimbles (34, 34') engaging in the connecting claws (18, 18') and conductors (36, 36'), of which the respective ends are crimped in recesses (38, 38') integral with said claws (18, 18') and on said thimbles (34, 34'), to produce the electrical linkage between the carrying cable (10) and the contact wire (12) via the pendulum cable (14).

2. Connecting pendulum according to claim 1, characterised in that each of the connecting claws (18, 18') consists of two similar parts which are snapped together, each of said parts of each connecting claw comprising a base (24) and a hook element (26) provided, on its internal face, with a plane profiled surface (28) which cooperates, when snapped together, with the corresponding surface of the similar hook element provided on the second part of the claw so as to form an eye in which there engages the thimble (34, 34') crimped on the pendulum cable (14) and in that the respective lower parts of the two claw elements define a groove in which the contact wire (12) or the carrying cable (10) engages when the two parts of the connecting claws are snapped together, thus causing the contact wire (12) or the carrying cable (10) to be gripped in the corresponding claw.
